## Europäisches Patentamt
## European Patent Office
## Office européen des brevets

(11) Veröffentlichungsnummer: **0 186 032**
**B1**

(12) **EUROPÄISCHE PATENTSCHRIFT**

(45) Veröffentlichungstag der Patentschrift:
**24.05.89**

(51) Int. Cl.⁴: **G11B 5/31**

(21) Anmeldenummer: **85115661.2**

(22) Anmeldetag: **09.12.85**

(54) **Dünnfilm-Magnetkopf für ein senkrecht zu magnetisierendes Aufzeichnungsmedium.**

(30) Priorität: **21.12.84 DE 3446924**

(43) Veröffentlichungstag der Anmeldung:
**02.07.86 Patentblatt 86/27**

(45) Bekanntmachung des Hinweises auf die Patenterteilung:
**24.05.89 Patentblatt 89/21**

(84) Benannte Vertragsstaaten:
**AT CH DE FR GB IT LI NL SE**

(56) Entgegenhaltungen:
**EP-A- 0 012 912**
**EP-A- 0 078 374**
**EP-A- 0 100 841**
**EP-A- 0 107 443**
**DE-A- 3 016 105**
**US-A- 4 182 643**

(73) Patentinhaber: **Siemens Aktiengesellschaft Berlin und München, Wittelsbacherplatz 2, D-8000 München 2(DE)**

(72) Erfinder: **Jahnke, Andreas, Dr., Tannenweg 4, D-8550 Forchheim(DE)**

ACTORUM AG

## Beschreibung

Die Erfindung bezieht sich auf einen Dünnfilm-Magnetkopf gemäss dem Oberbegriff des Anspruchs 1. Ein solcher Magnetkopf ist z.B. der EP 0 012 912 A1 zu entnehmen.

Das Prinzip der senkrechten Magnetisierung zur Speicherung von Informationen ist allgemein bekannt (vgl. z.B. "IEEE Transactions on Magnetics", Vol. MAG-16, No. 1, Januar 1980, Seiten 71 bis 76; DE-OS 29 24 013 oder die genannte EP-A1). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy discs) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung, enthält. Dabei ist die Achse der sogenannten leichten Magnetisierung dieser Schicht senkrecht zur Oberfläche des Mediums gerichtet. Mittels eines besonderen Magnetkopfes können dann längs einer Spur die einzelnen Informationen als Bits in aufeinanderfolgenden Abschnitten, auch Zellen oder Blöcke genannt, durch die entsprechende Magnetisierung der Speicherschicht eingeschrieben werden. In der Praxis benutzt man im allgemeinen die magnetischen Flußwechsel, d.h. die Übergänge von einer Magnetisierungsrichtung zu einer entgegengesetzten, als Informationen. Die sich so ergebenden Bits haben dabei eine vorbestimmte, auch als Wellenlänge bezeichnete Ausdehnung in Längsrichtung der Spur. Diese Ausdehnung kann im Vergleich zu der Grenze, die bei dem Prinzip einer longitudinalen (horizontalen) Speicherung durch die Entmagnetisierung gegeben ist, wesentlich kleiner sein. Somit läßt sich nach dem Prinzip der senkrechten Magnetisierung die Informationsdichte in dem Aufzeichnungsmedium vorteilhaft vergrößern.

Die für das Prinzip der longitudinalen Magnetisierung bekannten Schreib- und Lese-Magnetköpfe, d.h. Köpfe, mit denen sowohl die Schreib- als auch die Lese-Funktion auszuüben ist, können jedoch nicht ohne weiteres für eine senkrechte Magnetisierung übernommen werden. Bei Verwendung dieser Köpfe, die im allgemeinen ringkopfähnliche Gestalt haben, läßt sich zwar die auch bei dem Prinzip der senkrechten Magnetisierung angestrebte Flußführung zu einem möglichst geschlossenen Kreis mit geringem magnetischen Widerstand erreichen. Jedoch ist es schwierig, bei hohen Bit-Dichten und entsprechend kleiner Spaltweite des Ringkopfes ein hinreichend starkes Schreibfeld zu erzeugen.

Man sieht sich deshalb gezwungen, für das Prinzip der senkrechten Magnetisierung spezielle Schreib-/Lese-Magnetköpfe zu entwickeln. Ein hierfür geeigneter Magnetkopf, wie er z.B. aus der eingangs genannten EP-A1 zu entnehmen ist, weist zur Führung des magnetischen Flusses einen auf einem nicht-magnetischen Substrat aufgebrachten Leitkörper mit insbesondere ringkopfähnlicher Gestalt auf. Dieser Leitkörper umfaßt zwei Magnetschenkel etwa deckungsgleicher Gestalt, deren dem Aufzeichnungsmedium zugewandten Polendstücke in Bewegungsrichtung des Kopfes gesehen hintereinander und mit vorbestimmtem kleinen Abstand zueinander angeordnet sind und jeweils eine vorbestimmte geringe Breite haben. Die Polendstücke dieser Magnetschenkel gehen in sich quer zur Bewegungsrichtung des Kopfes bzw. quer zur Führungsrichtung des Magnetflusses verbreiternde Schenkelteile über, wobei der von dem Substrat weiter entfernte Magnetschenkel in seinem entsprechenden Schenkelteil auf einen größeren Abstand bezüglich des dem Substrat zugewandten Magnetschenkels führend ausgebildet ist. Auf diese Weise ergibt sich zwischen den beiden Magnetschenkeln ein ausreichend weiter Zwischenraum, durch welchen sich die Windungen einer flachen Schreib- und Lesespulenwicklung erstrecken. Sowohl für die Schreibfunktion als auch für die Lesefunktion des Magnetkopfes wird die ringkopfähnliche Gestalt des Leitkörpers ausgenutzt.

Die einzelnen Teile dieses bekannten Magnetkopfes sind dabei in Dünnfilm-Technologie auf dem Substrat schichtweise aufgebracht. Diese Technologie ist für SchreibLese-Köpfe allgemein bekannt (vgl. z.B. "Feinwerktechnik und Meßtechnik", 88. Jahrgang, Heft 2, März 1980, Seiten 53 bis 59 oder "Siemens-Zeitschrift", Band 52, Heft 7, 1978, Seiten 434 bis 437).

Bei der geometrischen Gestaltung der Magnetschenkel solcher Magnetköpfe werden unter anderem folgende Ziele angestrebt:

- Die Polendstücke der Magnetschenkel sollen möglichst dünn ausgebildet sein, damit kleine Bit-Muster gelesen und geschrieben werden können.
- Außerdem wird eine möglichst schmale Spurbreite angestrebt, um so eine hohe Flächendichte der gespeicherten Informationen zu erhalten.

Durch diese Forderungen werden die Abmessungen eines in Dünnfilm-Technologie erstellten Magnetkopfes mit ringkopfähnlicher Gestalt stark reduziert, so daß Streufelder im Bereich der benachbarten Polendstücke zu Kurzschlüssen im magnetischen Fluß führen können. Dies beeinträchtigt die Größe der Schreibfelder vor den Polenden und den Wirkungsgrad beim Lesen. Diese Beeinträchtigung ist insbesondere bei dem Prinzip der senkrechten (vertikalen) Magnetisierung von Bedeutung, da bei diesem Prinzip Bit-Längen von beispielsweise 0,25 µm und Spurbreiten von beispielsweise 10 µm angestrebt werden und somit die magnetische Energie eines Bits entsprechend klein ist.

Aufgabe der vorliegenden Erfindung ist es deshalb, den eingangs genannten Magnetkopf dahingehend zu verbessern, daß mit ihm für die genannten Bit-Abmessungen die Schreib- und Lesefunktion mit jeweils verhältnismäßig hohem Wirkungsgrad zu gewährleisten ist.

Diese Aufgabe wird erfindungsgemäß mit den im Kennzeichen des Hauptanspruchs angegebenen Merkmalen gelöst.

Aufgrund dieser besonderen Ausgestaltung des erfindungsgemäßen Magnetkopfes sind die sich unmittelbar gegenüberliegenden Flächen der beiden Polendstücke auf ein Minimum reduziert, so daß der Kurzschluß der magnetischen Flußlinien zwischen diesen Flächen entsprechend erschwert ist. Da ferner das sich schräg entfernende Schenkelteil des von dem Substrat entfernteren Magnetschenkels schnell breit wird und in seiner Mitte eine Aussparung aufweist, während das darunterliegende Polendstück des dem Substrat zugewandten Magnetschenkels zumindest in diesem Bereich unverändert schmal bleibt, sind auch die von dem sich entfernenden Schenkelteil abgedeckten Flächenteile des darunterliegenden Magnetschenkels zumindest in Bereichen mit geringem Abstand entsprechend klein zu halten, so daß sich auch aufgrund dieser Maßnahme eine Reduzierung des magnetischen Streuflusses zwischen diesen Teilen der beiden Magnetschenkel ergibt. Diese Reduzierung des magnetischen Streuflusses bewirkt insbesondere bei kleinen Spurbreiten eine merkliche Steigerung des senkrechten Schreibfeldes sowie auch eine Verbesserung des Wirkungsgrades des Kopfes beim Lesen.

Vorteilhafte Ausgestaltungen des Magnetkopfes nach der Erfindung gehen aus den Unteransprüchen hervor.

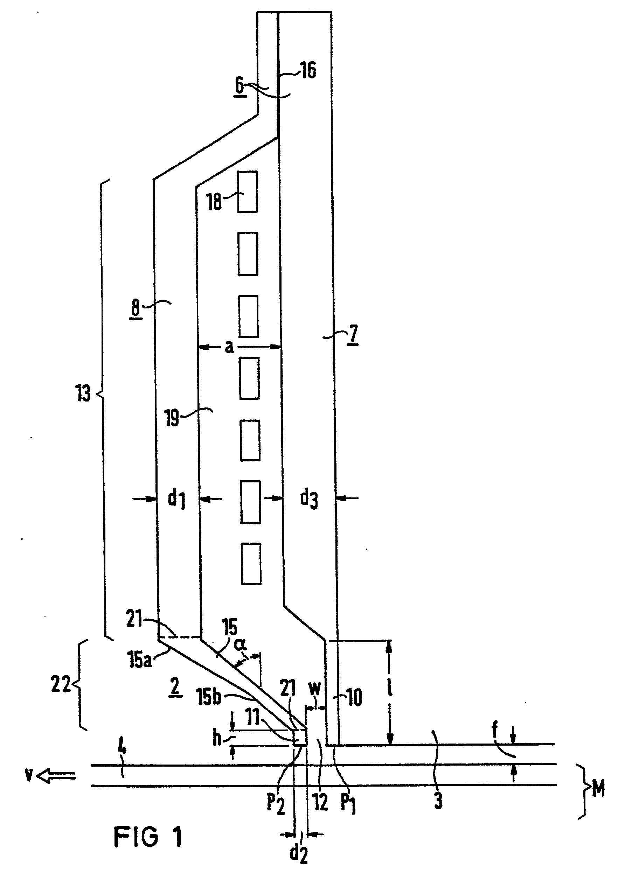

Zur weiteren Erläuterung der Erfindung wird nachfolgend auf die Zeichnung Bezug genommen, in deren Figuren 1 bis 3 jeweils ein Ausführungsbeispiel eines erfindungsgemäßen Magnetkopfes als Längsschnitt bzw. in Schrägansicht bzw. als Aufsicht schematisch veranschaulicht ist. Dabei sind in den Figuren entsprechende Teile mit den gleichen Bezugszeichen versehen.

Bei dem in Figur 1 nur teilweise ausgeführten Magnetkopf zum Schreiben und Lesen wird von an sich bekannten ringkopfähnlichen Ausführungsformen mit in Dünnfilm-Technologie erstelltem schichtweisen Aufbau für das Prinzip der senkrechten (vertikalen) Magnetisierung ausgegangen (vgl. z.B. die genannte EP-A1 oder die EP 0 071 489 A2). Der in der Figur allgemein mit $\underline{2}$ bezeichnete Kopf befindet sich auf der Flachseite eines Substrates 3, das die Stirn- oder Rückseite eines gebräuchlichen, als Flugkörper bezeichneten Elementes bildet, welches in der Figur nur angedeutet ist. Dieser Kopf ist relativ zu einem an sich bekannten, vertikal zu magnetisierenden Aufzeichnungsmedium M in geringer Flughöhe f von beispielsweise 0,2 μm längs einer Spur zu führen. Das Aufzeichnungsmedium M, z.B. eine Magnetspeicherplatte, weist eine Speicherschicht 4, insbesondere aus einer CoCr-Legierung, auf, die gegebenenfalls auf ihrer dem Magnetkopf $\underline{2}$ abgewandten Seite mit weiteren Schichten, z.B. aus einer speziellen NiFe-Legierung, verbunden sein kann. Die relative Bewegungsrichtung des beispielsweise unter dem Kopf hinweggeführten Aufzeichnungsmediums M bezüglich des Kopfes ist durch eine mit v bezeichnete gepfeilte Linie angedeutet.

Der Magnetkopf $\underline{2}$ enthält einen den magnetischen Fluß führenden Leitkörper $\underline{6}$ mit zwei Magnetschenkeln $\underline{7}$ und $\underline{8}$.

Diese Schenkel sind weitgehend und insbesondere an ihren dem Aufzeichnungsmedium M zugewandten Polendstücken 10 und 11 zumindest annähernd senkrecht zur Oberfläche des Aufzeichnungsmediums ausgerichtet und bilden dort jeweils einen Magnetpol $P_1$ bzw. $P_2$. Zwischen diesen beiden Polendstücken ist ein Luftspalt 12 mit einer vorteilhaft geringen longitudinalen, d.h. in Bewegungsrichtung v weisenden Weite w von unter 1 μm, insbesondere von etwa 0,5 μm ausgebildet. In einem mittleren Bereich des Kopfes ist der Abstand zwischen den Magnetschenkeln $\underline{7}$ und $\underline{8}$ gegenüber dieser Spaltweite w erweitert, indem z.B. der hinsichtlich der Bewegungsrichtung rückwärtige Magnetschenkel $\underline{8}$ mit einem sich an das Polendstück 11 anschließenden Schenkelteil 15 auf einen größeren Abstand a bezüglich des vorderen, gerade ausgebildeten und dem Substrat 3 am nächsten liegenden Magnetschenkels $\underline{7}$ führt. In diesem Bereich weist der Magnetschenkel $\underline{8}$ eine Dicke $d_1$ von etwa 4 μm auf. Der schrägliegende Schenkelteil 15 ist hinsichtlich seiner Dicke sich verjüngend ausgebildet, indem seine Dicke von der Dicke $d_1$ des Magnetschenkels $\underline{8}$ auf die wesentlich geringere Dicke $d_2$ des Polendstückes 11 von beispielsweise 1 μm abnimmt. Gemäß dem dargestellten Ausführungsbeispiel weist der Schenkelteil 15 ein sich entsprechend verjüngendes Teilstück 15a und ein Teilstück 15b mit etwa konstanter Dicke auf. Der dem Substrat 3 zugewandte Magnetschenkel $\underline{7}$ hat bis auf sein Polendstück 10, das etwa gleich dick wie das Polendstück 11 ist, eine Dicke $d_3$, die z.B. der Dicke $d_1$ des Magnetschenkels $\underline{8}$ im Bereich 13 entspricht. Außerhalb des Bereiches 13 auf der dem Aufzeichnungsmedium M abgewandten Seite ist der Magnetschenkel $\underline{8}$ in bekannter Weise in einem Verbindungsbereich 16 an den Magnetschenkel $\underline{7}$ angefügt, so daß sich die ringkopfähnliche Gestalt des Magnetkopfes $\underline{2}$ ergibt.

Ferner enthält der Magnetkopf $\underline{2}$ sowohl für die Lesefunktion als auch für die Schreibfunktion nach dem Prinzip der senkrechten (vertikalen) Magnetisierung eine insbesondere mehrlagige, flache Spulenwicklung 18, deren Windungen sich durch den zwischen den beiden Magnetschenkeln $\underline{7}$ und $\underline{8}$ in dem mittleren Bereich 13 ausgebildeten Zwischenraum 19 erstrecken.

Gemäß der Erfindung soll die durch unmittelbar benachbarte, flächenparallele Bereiche der beiden Polendstücke 10 und 11 festgelegte Spalthöhe h in vertikaler, d.h. senkrecht zur Oberfläche des Aufzeichnungsmediums M weisender Richtung möglichst klein gehalten werden und insbesondere unter 2 μm liegen, vorzugsweise höchstens 1 μm betragen. Dies wird dadurch erreicht, daß der äußere Magnetschenkel $\underline{8}$ bereits in dieser Höhe in seinen sich von dem Magnetschenkel $\underline{7}$ weiter entfernenden Schenkelteil 15 übergeht, wobei der Neigungswinkel α gegenüber der Oberfläche des Substrates 3 bzw. des Magnetschenkels $\underline{7}$ möglichst groß gewählt wird und mindestens 40°, vorzugsweise mindestens 60° beträgt. Außerdem soll sich dieser schräg entfernende Schenkelteil 15 quer zur Bewegungsrichtung v schnell verbreitern und darüber hinaus längs seiner in Richtung der Magnetflußführung weisenden Mittellinie bzw. -ebene 20 eine Aussparung 21 aufweisen, die zumindest annähernd bis an das zugeordnete Polendstück 11 heranreicht. Diese Aussparung 21 ist in der Darstellung der Figur 1 lediglich durch gepunktete Linien angedeutet. Hingegen soll das Polendstück 10 des dem Substrat 3 zugewandten Magnetschenkels 7 in diesem mit 22 bezeichneten Magnetkopfbereich zwischen Polendstück 11 und Bereich 13 zumindest ein großes Stück weit unverändert schmal bleiben, beispielsweise bis die beiden Magnetschenkel etwa ihren maximalen Abstand a erreicht haben.

Erst dann wird vorteilhaft der Magnetschenkel 7 ebenfalls verbreitert. Somit wird als vertikale Länge l des längeren Polendstückes 10 vorteilhaft mindestens das Doppelte, vorzugsweise mindestens das Fünffache der entsprechenden Länge des kürzeren Polendstückes 11 bzw. der Spalthöhe h gewählt.

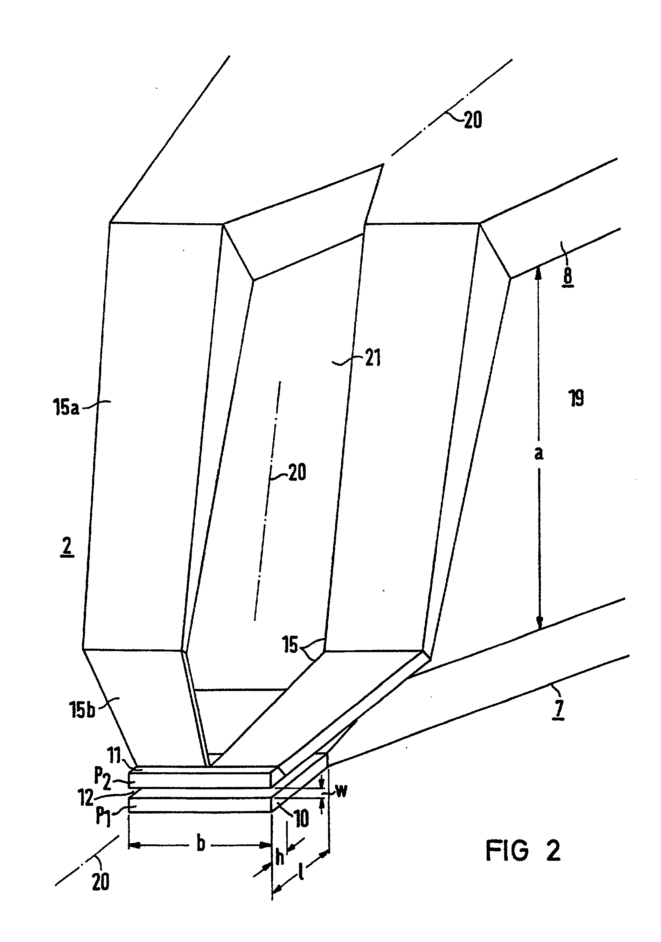

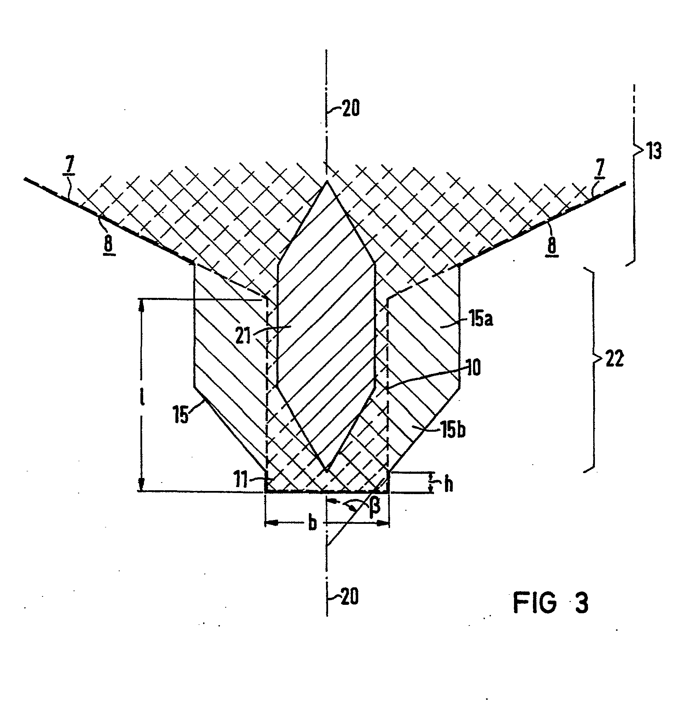

Die erfindungsgemäße Ausgestaltung der beiden Magnetschenkel 7 und 8 des Magnetkopfes 2 geht aus den Figuren 2 und 3 näher hervor. Dabei sind in Figur 3 die sich überlappenden Magnetschenkel durch in verschiedene Richtungen verlaufende Schraffuren veranschaulicht. Insbesondere aus Figur 3 ist ersichtlich, daß der die Verbreiterung des Schenkelteils 15 quer zur Bewegungsrichtung v festlegende, gegenüber der in Bewegungsrichtung bzw. Flußführungsrichtung verlaufenden Mittelebene 20 gemessene Öffnungswinkel β möglichst groß gewählt werden soll und beispielsweise mindestens 40°, vorzugsweise mindestens 60° beträgt. Dann kann nämlich die mittige Aussparung 21 hinreichend groß ausgebildet werden, so daß einerseits von dem Schenkelteil 15 nur verhältnismäßig kleine Flächenteile des darunterliegenden Polendstückes 10 des Magnetschenkels 7 überlappt werden, andererseits jedoch ein ausreichender Materialquerschnitt zur Führung des magnetischen Flusses vorhanden ist. In Figur 3 sind die sich so überlappenden Flächenteile aufgrund der sich ergebenden Kreuzschraffur ersichtlich. Der sich zwischen den flächenparallelen Bereichen der Polendstücke 10 und 11 ergebende Spalt hat dabei vorteilhaft eine sehr kleine Fläche b · h, wobei h die Spalthöhe und b die Breite der Polendstücke 10 und 11 quer zur Bewegungsrichtung sind. Diese die Spurbreite festlegende Polendstücksbreite b kann beispielsweise etwa 10 µm betragen.

Die Herstellung des erfindungsgemäßen Magnetkopfes wird vorteilhaft in an sich bekannter Dünnschicht- bzw. Dünnfilm-Technik vorgenommen. Das hierbei verwendete Substrat besteht z.B. aus TiC oder Al₂O₃. Zum Aufbau der Magnetschenkel werden dünne Magnetschichten aus speziellen Legierungen oder weichmagnetischen amorphen Materialien hoher Permeabilität durch Sputtern, Aufdampfen oder galvanische Abscheidung auf das Substrat aufgebracht und jeweils durch nicht magnetische Zwischenlagen voneinander getrennt. Die leichte Richtung der Magnetisierung kann z.B. beim Aufbringen der jeweiligen Schicht durch ein angelegtes Magnetfeld induziert werden. Sie liegt im allgemeinen immer senkrecht zur Richtung des magnetischen Flusses in dem magnetischen Leitkörper, d.h. im Bereich der Magnetpole $P_1$ und $P_2$ im wesentlichen parallel zur Oberfläche des Aufzeichnungsmediums M. Die aufgewachsenen unterschiedlichen Schichten werden durch an sich bekannte Techniken wie Fotolithographie, Plasma-, Ionenstrahl oder naßchemisches Ätzen strukturiert und damit die Magnetschenkel des Kopfes ausgebildet. Zur Herstellung der für die Schreib- und Lesefunktion vorgesehenen Spulenwicklung werden Schichten aus Cu oder Al oder Au abgeschieden und entsprechend strukturiert. Die für den Aufbau des Magnetkopfes noch erforderlichen einzelnen Isolationsschichten, insbesondere die Spaltschicht, sind in den Figuren aus Gründen der Übersichtlichkeit nicht ausgeführt.

**Patentansprüche**

1. Dünnfilm-Magnetkopf (2) mit schichtweisem Aufbau auf einem nicht-magnetischen Substrat (3) für ein Aufzeichnungsmedium (M), das mit einer magnetisierbaren Speicherschicht (4) versehen ist, in welche längs einer Spur Informationen durch senkrechte (vertikale) Magnetisierung der Speicherschicht (4) einzuschreiben sind, welcher Magnetkopf einen den magnetischen Fluß führenden ringkopfähnlichen Leitkörper (6) mit zwei Magnetschenkeln (7, 8) aufweist, deren dem Aufzeichnungsmedium (M) zugewandten Polendstücke (10, 11) in Bewegungsrichtung (v) des Kopfes (2) gesehen hintereinander und mit vorbestimmtem kleinen Abstand (w) zueinander angeordnet sind und jeweils eine vorbestimmte geringe Breite (b) quer zur Bewegungsrichtung (v) haben, wobei
   – der von dem Substrat (3) weiter entfernte Magnetschenkel (8) auf einen größeren Abstand (a) bezüglich des dem Substrat (3) zugewandten Magnetschenkels (7) führend ausgebildet ist, so daß zwischen den beiden Magnetschenkeln (7, 8) ein entsprechend weiter Zwischenraum (19) vorhanden ist, durch welchen sich die Windungen einer Schreib-/Lesespulenwicklung (18) erstrecken,
   – die Magnetschenkel (7, 8) außerhalb des Bereichs ihrer Polendstücke (10, 11) sich verbreiternde Schenkelteile aufweisen und
   – die vertikale Länge (h) des Polendstückes (11) des von dem Substrat (3) weiter entfernten Magnetschenkels (8) verhältnismäßig klein ist, während die entsprechende Länge (1) des anderen Polendstückes (10) mindestens doppelt so groß ist,
   dadurch gekennzeichnet, daß sich bei dem von dem Substrat (3) weiter entfernten Magnetschenkel (8) bereits an sein vergleichsweise kürzeres Polendstück (11) der sich verbreiternde, auf den größeren Abstand (a) führende Schenkelteil (15) anschließt und daß dieser sich verbreiternde Schenkelteil (15) mit einer Aussparung (21) versehen ist, die sich längs seiner in Führungsrichtung des Magnetflusses liegenden Mittellinie (20) erstreckt und zumindest annähernd bis an das kürzere Polendstück (11) heranreicht.

2. Magnetkopf nach Anspruch 1, dadurch gekennzeichnet, daß die vertikale Länge (1) des längeren Polendstückes (10) mindestens das 5-Fache der entsprechenden Länge (Spalthöhe h) des kürzeren Polendstückes (11) beträgt.

3. Magnetkopf nach Anspruch 1 oder 2, dadurch gekennzeichnet, daß die vertikale Länge (Spalthöhe h) des kürzeren Polendstückes (11) höchstens 2 µm, vorzugsweise höchstens 1 µm beträgt.

4. Magnetkopf nach einem der Ansprüche 1 oder 3, dadurch gekennzeichnet, daß sich das vergleichsweise längere Polendstück (10) mit annähernd konstanter Breite bis in einen Bereich (13) erstreckt, in dem der Magnetschenkel (8) mit dem kürzeren Polendstück (11) seinen größten Abstand (a) bezüglich des Magnetschenkels (7) mit dem längeren Polendstückes (10) aufweist.

5. Magnetkopf nach einem der Ansprüche 1 bis 4, dadurch gekennzeichnet, daß der Neigungswinkel (α) des sich verbreiternden, mit dem kürzeren Polenndstück (11) verbundenen Schenkelteils (15) gegenüber der Oberfläche des Substrates (3) mindestens 40°, vorzugsweise mindestens 60° beträgt.

6. Magnetkopf nach einem der Ansprüche 1 bis 5, dadurch gekennzeichnet, daß der die Verbreiterung des mit der Aussparung (21) versehenen Schenkelteiles (15) festlegende Öffnungswinkel (β) bezüglich der Mittellinie (20) dieses Schenkelteiles (15) mindestens 40°, vorzugsweise mindestens 60° beträgt.

7. Magnetkopf nach einem der Ansprüche 1 bis 6, dadurch gekennzeichnet, daß sein den Magnetfluß führender Leitkörper (6) aus weichmagnetischem Material besteht.

8. Magnetkopf nach einem der Ansprüche 1 bis 7, dadurch gekennzeichnet, daß sein den Magnetfluß führender Leitkörper (6) aus einem Material besteht, dessen leichte Magnetisierung zumindest weitgehend senkrecht zur Führungsrichtung des magnetischen Flusses gerichtet ist.

## Revendications

1. Tête magnétique à couches minces (2) possédant une structure formée de couches et disposée sur un substrat amagnétique (3) pour un support d'enregistrement (M), qui possède une couche de mémoire aimantable (4), dans laquelle des informations doivent être enregistrées le long d'une piste au moyen d'une aimantation perpendiculaire (verticale) de la couche de mémoire (4), laquelle tête magnétique comporte un corps de guidage (6) en forme de tête annulaire, guidant le flux magnétique et possédant deux branches magnétiques (7, 8), dont les pièces polaires d'extrémité (10, 11), tournées vers le support d'enregistrement (M), sont disposées l'une derrière l'autre dans la direction de déplacement (v) de la tête (2), à une faible distance réciproque prédéterminée (w) et possèdent respectivement une faible largeur prédéterminée (b) transversalement par rapport à la direction de déplacement (v), et dans laquelle

– la branche magnétique (8), qui est la plus éloignée du substrat (3), est agencée de manière à être disposée à une distance accrue (a) par rapport à la branche magnétique (7) située près du substrat (3), de sorte qu'il existe, entre les deux branches magnétiques (7, 8), un espace intermédiaire correspondant étendu (19), à travers lequel s'étendent les spires d'un enroulement de bobine d'enregistrement/lecture (18),

– les branches magnétiques (7, 8) possèdent des parties qui s'élargissent à l'extérieur de la zone de leurs pièces polaires d'extrémité (10, 11), et

– l'étendue verticale (h) de la pièce polaire d'extrémité (11) de la branche magnétique (8) la plus éloignée du substrat (3) est relativement faible, tandis que l'étendue correspondante (1) de l'autre pièce polaire d'extrémité (10) est au moins égale au double,

caractérisée par le fait que, dans le cas de la branche magnétique (8) la plus éloignée du substrat (3), la partie élargie (15) de la branche, qui est disposée à une distance accrue (a), se raccorde déjà à la pièce polaire d'extrémité (11), comparativement plus courte, de cette branche, et que cette partie élargie (15) de la branche comporte un évidement (21), qui s'étend le long de sa ligne médiane (20), disposée dans la direction de guidage du flux magnétique, et disposée au moins approximativement jusqu'à la pièce polaire d'extrémité (11) la plus courte.

2. Tête magnétique suivant la revendication 1, caractérisée par le fait que l'étendue verticale (1) de la pièce polaire d'extrémité (10) la plus longue est égale au moins au quintuple de l'étendue correspondante (hauteur h de l'entrefer) de la pièce polaire d'extrémité (11) la plus courte.

3. Tête magnétique suivant la revendication 1 ou 2, caractérisée par le fait que l'étendue verticale (hauteur h de l'entrefer) de la pièce polaire d'extrémité (11) la plus courte est égale au maximum à 2 µm et de préférence au maximum à 1 µm.

4. Tête magnétique suivant l'une des revendications 1 ou 3, caractérisée par le fait que la pièce polaire d'extrémité (10), comparativement la plus longue, s'étend avec une largeur approximativement constante jusque dans une zone (13), dans laquelle la distance (a) entre la branche magnétique (8) possédant la pièce polaire d'extrémité (11) la plus courte et la branche magnétique (7) possédant la pièce polaire d'extrémité (10) la plus longue, est maximale.

5. Tête magnétique suivant l'une des revendications 1 à 4, caractérisée par le fait que l'angle d'inclinaison (α) de la partie élargie (15) de la branche, qui est reliée à la pièce polaire d'extrémité (11) la plus courte, par rapport à la surface du substrat (3) est égal au moins à 40° et e préférence au moins à 60°.

6. Tête magnétique suivant l'une des revendications 1 à 5, caractérisée par le fait que l'angle d'ouverture (β), qui fixe l'élargissement de la partie (15) de la branche, pourvue de l'évidement (21), par rapport à la ligne médiane (20) de cette partie (15) de la branche, est égal au moins à 40° et de préférence au moins à 60°.

7. Tête magnétique suivant l'une des revendications 1 à 6, caractérisée par le fait que son corps de guidage (6), qui guide le flux magnétique, est réalisé en un matériau magnétique doux.

8. Tête magnétique suivant l'une des revendications 1 à 7, caractérisée par le fait que son corps de guidage (6), qui guide le flux magnétique, est réalisé en un matériau, dont l'aimantation facile est dirigée, au moins dans une large mesure, perpendiculairement à la direction de guidage du flux magnétique.

## Claims

1. Thin-film magnetic head (2) with a layered construction on a non-magnetic substrate (3) for a recording medium (M) which is provided with a magnetisable storage layer (4), into which information is to be written along a track by the perpendicular (vertical) magnetisation of the storage layer (4), which magnetic head has an annular-head-like conductor body (6) conveying the magnetic flux, with two magnetic limbs (7, 8) whose pole end pieces (10, 11) facing the recording medium (M) are arranged one behind the other, seen in the direction of movement (v) of the head (2), and with a predetermined small space (w) between each other, and each have a predetermined small width (b) transverse to the direction of movement (v), wherein

– the magnetic limb (8) further away from the substrate (3) is constructed to extend to a greater distance (a) with respect to the magnetic limb (7) facing the substrate (3), so that between the two magnetic limbs (7, 8) there is a correspondingly wide intermediate space (19) through which extend the turns of a write-read coil winding (18),

– the magnetic limbs (7, 8) outside the area of their pole end pieces (10, 11) have widening limb portions and

– the vertical length (h) of the pole end piece (11) of the magnetic limb (8) further away from the substrate (3) is comparatively small, whilst the corresponding length (1) of the other pole end piece (10) is at least twice as large,

characterised in that in the case of the magnetic limb (8) further away from the substrate (3) the widening limb portion (15) leading to the greater distance (a) is directly connected to its comparatively shorter pole end piece (11), and in that this widening limb portion (15) is provided with a recess (21) which extends along its centre line (20) lying in the guide direction of the magnetic flux and extends at least approximately up to the shorter pole end piece (11).

2. Magnetic head according to claim 1, characterised in that the vertical length (1) of the longer pole end piece (10) is at least 5 times the corresponding length (gap height h) of the shorter pole end piece (11).

3. Magnetic head according to claim 1 or 2, characterised in that the vertical length (gap height h) of the shorter pole end piece (11) is at the most 2 µm, preferably at the most 1 µm.

4. Magnetic head according to one of claim 1 or 3, characterised in that the comparatively longer pole end piece (10) extends with approximately constant width up to an area (13) in which the magnetic limb (8) with the shorter pole end piece (11) has its maximum distance (a) with respect to the magnetic limb (7) with the longer pole end piece (10).

5. Magnetic head according to one of claims 1 to 4, characterised in that the angle of inclination (α) of the widening limb portion (15) connected to the shorter pole end piece (11) is at least 40°, preferably at least 60°, with respect to the surface of the substrate (3).

6. Magnetic head according to one of claims 1 to 5, characterised in that the opening angle (β) determining the widening of the limb portion (15) provided with the recess (21) is at least 40°, preferably at least 60°, with respect to the centre line (20) of this limb portion (15).

7. Magnetic head according to one of claims 1 to 6, characterised in that its conductor body (6) conveying the magnetic flux is made of a soft magnetic material.

8. Magnetic head according to one of claims 1 to 7, characterised in that its conductor body (6) conveying the magnetic flux is of a material whose direction of easy magnetisation is at least substantially perpendicular to the guide direction of the magnetic flux.

FIG 1

FIG 2

EP 0 186 032 B1

FIG 3